(19) 

Europäisches Patentamt

European Patent Office

Office européen des brevets

(11) **EP 4 640 913 A1**

(12) **EUROPEAN PATENT APPLICATION**

published in accordance with Art. 153(4) EPC

(43) Date of publication:
**29.10.2025 Bulletin 2025/44**

(21) Application number: **23907642.5**

(22) Date of filing: **15.12.2023**

(51) International Patent Classification (IPC):
*C23C 2/12* (2006.01)     *C23C 2/28* (2006.01)
*C23C 2/40* (2006.01)     *C22C 38/58* (2006.01)
*C22C 38/50* (2006.01)     *C22C 38/42* (2006.01)
*C22C 38/54* (2006.01)     *C22C 38/46* (2006.01)
*C22C 38/44* (2006.01)     *C21D 8/02* (2006.01)

(52) Cooperative Patent Classification (CPC):
**C21D 8/02; C21D 9/46; C22C 38/42; C22C 38/44;
C22C 38/46; C22C 38/50; C22C 38/54;
C22C 38/58; C23C 2/12; C23C 2/28; C23C 2/40**

(86) International application number:
**PCT/KR2023/020836**

(87) International publication number:
**WO 2024/136357 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220181030**

(71) Applicant: **POSCO Co., Ltd
Pohang-si, Gyeongsangbuk-do 37859 (KR)**

(72) Inventors:
• **OH, Kkoch-Nim
Gwangyang-si, Jeollanam-do 57807 (KR)**
• **HWANG, Hyeon-Seok
Gwangyang-si, Jeollanam-do 57807 (KR)**
• **LEE, Kang-Min
Gwangyang-si, Jeollanam-do 57807 (KR)**
• **KIM, Sang-Heon
Gwangyang-si, Jeollanam-do 57807 (KR)**
• **OH, Ji-Eun
Gwangyang-si, Jeollanam-do 57807 (KR)**
• **CHO, Yong-Kyun
Seoul 06194 (KR)**

(74) Representative: **Meissner Bolte Partnerschaft
mbB
Patentanwälte Rechtsanwälte
Postfach 86 06 24
81633 München (DE)**

(54) **ALUMINUM PLATED STEEL SHEET, HOT PRESS FORMED PART USING SAME AND MANUFACTURING METHODS THEREFOR**

(57) The present invention relates to an aluminum plated steel sheet for use in automobiles and the like, a hot press formed part manufactured using same and manufacturing methods therefor.

[Fig.2]

## Description

### Technical Field

The present disclosure relates to an aluminum plated steel sheet for use in automobiles and the like, a hot press formed part manufactured using the same and manufacturing methods therefor.

### Background Art

Recently, efforts are being made to improve fuel efficiency through weight reduction of automobiles. To this end, the thickness of steel may be reduced, but if the thickness is reduced, problems may arise in the stability of the automobile, so the strength of steel should be improved. For this reason, the demand for high-strength steel has continuously occurred, and various types of steel have been developed. However, because these steels have high strength, they have problems such as poor workability, such as a springback phenomenon.

To solve these problems, the hot press forming process has been proposed. The hot press forming process is also called hot press forming, hot working, or the like. The hot press forming process is a method of forming low-temperature structures such as martensite or the like in the steel by processing the steel at a high temperature (800°C or higher) that is good for processing, and then rapidly cooling the steel to a low temperature while press forming the steel in a mold, thereby increasing the strength of the final product. In this case, the problem of processability may be minimized when manufacturing a high-strength member.

Using such hot press forming, not only may complex shapes be easily formed, but the manufactured part (hot press formed part) has the advantage of securing high strength, and thus its usability has been increasing recently. In particular, by using a plated steel using aluminum, zinc, or the like on the surface of the steel, corrosion resistance is also sought to be secured. For example, Patent Document 1 discloses the use of a steel sheet plated with aluminum in a hot press forming process.

The hot press formed part using the aluminum-plated steel may secure corrosion resistance by aluminum plating, but there is a problem that roll pollution may occur when the high-temperature aluminum-plated steel moves along the roll for mold forming.

If roll pollution occurs during the process of being transferred to the mold, the direction of movement of the high-temperature plated steel transferred to the mold slightly tilts, so that it is not transferred straight to the mold but moves diagonally. In detail, the process that should be performed automatically up to mold forming stops, which causes a major problem that reduces productivity. The plating layer of the high-temperature aluminum-plated steel transferred along the roll may exist in a molten aluminum state, and moves while contacting the roll in this state, and thus, the molten aluminum plating layer sticks to the roll, causing roll pollution. Since roll pollution is a problem that inevitably occurs, much research is being conducted to resolve the problem caused thereby.

As such, the problems and inconveniences caused by roll pollution reduce the quality and productivity of the product, and there is a constant demand to improve this.

(Patent Document 1) U.S. Patent No. 6,296,805

## Summary of Invention

### Technical Problem

An aspect of the present disclosure is to provide an aluminum plated steel sheet that may be used for hot press forming or the like, and an aluminum plated steel sheet having excellent roll pollution resistance, a hot press formed part manufactured using the same, and a method for manufacturing the same.

The subject matter of the present disclosure is not limited to the above-described contents. Those skilled in the art to which the present disclosure pertains will have no difficulty in understanding additional subjects of the present disclosure from the general contents of the present disclosure specification.

### Solution to Problem

According to an aspect of the present disclosure, an aluminum plated steel sheet includes a base steel sheet and an Al plating layer formed on the base steel sheet,

and in GDOES analysis results in the thickness direction from the surface of the Al plating layer, the Fe concentration gradient in the section where the Fe content in the Al plating layer is 40 to 90 wt.% is 13 to 26 wt.%/$\mu$m, and the Fe content of the Al plating layer is 8 to 24 wt.%.

According to another aspect of the present disclosure, a method for manufacturing an aluminum plated steel sheet includes an operation of immersing a base steel sheet in an aluminum (Al) plating bath containing silicon (Si) to attach a plating solution to the surface of the base steel sheet;

an operation of controlling the plating amount on the surface of the base steel sheet using an air knife (A/K); and an operation of transferring the base steel sheet to which the plating solution is attached to a cooling means and cooling the same, and satisfies the condition of the following (Formula 2).

$$\text{(Formula 2)} \quad K = 10^6*(a*d)/(b*c*e),$$

where, a: plating bath Si content (wt.%), b: line speed (mpm), c: A/K gap (mm), d: A/K pressure (kPa), A/K height (mm).

According to another aspect of the present disclosure, a hot press formed part includes a base iron, an Fe-Al alloy plating layer formed on the base iron, and a diffusion layer formed between the base iron

and the Fe-Al alloy plating layer, wherein in a GDOES analysis graph of Fe and Al contents observed in a thickness direction from a surface of the Fe-Al alloy plating layer, Fe-hump and Al-hump exist,
and the following relationship 1 is satisfied.

Fe maximum value (wt.%) of Fe-hump > Al maximum value (wt.%) of Al-hump.      [Relationship 1]

The Fe maximum value (wt.%) of the Fe-hump may be 50 wt.% or more.
The Al maximum value (wt.%) of the Al-hump may be 50 wt.% or less.
The hot press formed part may satisfy the following relationship 2.

Minimum value (wt.%) of Fe content observed between maximum value of Fe-hump and diffusion layer > Maximum value (wt.%) of Al-hump.      [Relationship 2]

The number of Al-humps may be two or more.
The hot press formed part may satisfy the following relationship 3.

1/2x[(Maximum value(wt.%) of Al-Hump) + (Minimum value(wt.%) of Al between Al-Hump)] ≤ Minimum Value (wt.%) of Fe Content observed between Maximum Value of Fe-Hump and Diffusion Layer      [Relationship 3]

The Fe-hump may exist between the Al-humps in the thickness direction.
The base iron may include, in wt.%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, and REM: 0 to 0.3%, and Fe and impurities as remainders.
According to another aspect of the present disclosure, a method for manufacturing a hot press formed part includes an operation of manufacturing a blank using the aluminum plated steel sheet;

an operation of heating the blank; and
an operation of forming and cooling the heated blank in a mold.

**Advantageous Effects of Invention**

According to an aspect of the present disclosure, the hot press formed part, which is an example of the present disclosure, may reduce roll pollution caused by molten aluminum in the surface layer portion due to slow alloying of the plating layer when moving to a heating furnace. As a result, the quality of the hot press formed part may be secured and work efficiency may be improved.
The various advantageous advantages and effects of the present disclosure are not limited to the above-described contents, and will be more easily understood in the process of explaining detailed embodiments of the present disclosure.

**Brief Description of Drawings**

FIG. 1 is the result of GDOES Fe Depth profile for an aluminum plated steel sheet of Invention example 2 among the examples.

FIG. 2 is the result of GDOES analysis of Fe and Al profiles for a hot press formed part of Invention example 3 among the examples.

FIG. 3 is a photograph of the specimen observed after V-bending experiment in the example.

FIG. 4 is the result of measuring the amount of powder generated after the V-bending experiment in the example.

**Best Mode for Invention**

Hereinafter, the present disclosure will be described in detail.

The terms used in the present disclosure are for describing the present disclosure and are not intended to limit the present disclosure. In addition, the singular forms used in this specification include the plural forms unless the relevant definition clearly indicates a meaning contrary thereto.

The meaning of "comprising" or "including" as used in the specification is to specify a configuration and does not exclude the presence or addition of other configurations.

Unless defined otherwise, all terms including technical and scientific terms used in this specification have the same meaning as those generally understood by a person of ordinary skill in the art to which the present disclosure belongs. Terms defined in the dictionary are interpreted to have a meaning consistent with the relevant technical literature and the presently disclosed content.

In the present disclosure, the term "part" refers to a component or a component material manufactured by hot press forming. In addition, the term "steel sheet" refers to a steel sheet or steel material before hot press forming, and also includes forms such as coils and the like.

When hot press forming is performed using plated steel, the slower the alloying of the plated layer, the more the molten plated layer sticks to the roll, causing roll pollution. Therefore, it has been recognized that it is important to develop a material that may alloy the plated layer as quickly as possible during hot press forming.

When aluminum-plated steel is heated, Fe of the base iron is diffused into the Al plating layer, forming an Fe-Al alloy plating layer, and a diffusion layer is formed between the base iron and the Fe-Al alloy plating layer. The diffusion layer and the Fe-Al alloy plating layer form an Fe-Al alloy as Fe diffuses from the base iron portion starting from $\alpha$-Fe with a high Fe content in the form of $Fe_3Al \rightarrow FeAl \rightarrow Fe_2Al_5 \rightarrow FeAl_3$ according to the Fe content. The part where $Fe_3Al$ and $\alpha$-Fe with high Fe content are formed in large quantities is referred to as the diffusion layer, and the part where $FeAl$, $Fe_2Al_5$, and $FeAl_3$ with relatively high Al content are formed in large quantities is referred to as the Fe-Al alloy plating layer. In the case of Al, the melting point is 660°C, and thus when moving along a roll in a 900°C heating furnace, Al sticks to the roll. However, if Fe is rapidly diffused to the surface layer in the form of $FeAl_3$ in a short period of time in the heating furnace, the melting point of $FeAl_3$ is 1160°C, which may delay roll pollution. Therefore, it is important to develop a material that may increase the alloying speed of Fe as much as possible.

Accordingly, the inventors of the present disclosure have deeply studied a method to increase the diffusion speed of Fe in the alloying of the plating layer during hot press forming of an aluminum plated steel sheet to reduce the roll pollution problem, and have thus reached the present disclosure.

**First, an embodiment of the aluminum plated steel sheet of the present disclosure will be described in detail.**

The aluminum plated steel sheet includes a base steel sheet and an Al plating layer formed on the base steel sheet, and the Al plating layer includes an alloy layer formed at an interface with the base steel sheet. The alloy layer means a layer formed by alloying the base steel sheet and the Al plating layer by reacting therebetween. As an example of the formation of the alloy layer, when the base steel sheet is immersed in an Al plating bath, the base steel sheet and the Al plating bath components may first react and be formed.

In the results of Glow Discharge Optical Emission Spectrometry (GDOES) analysis in the thickness direction inside the base steel sheet from the surface of the Al plating layer, the Fe concentration gradient in the section where the Fe content in the Al plating layer is 40 to 90 wt.% includes 13 to 26 wt.%/$\mu$m.

As described above, to improve roll pollution resistance, the diffusion rate of Fe should be increased during the alloying process of the Al plating layer when moving to the heating furnace. To this end, it is necessary to sufficiently diffuse Fe into the Al plating layer in a short period of time when moving to the heating furnace to perform alloying.

According to the Fick's first law of (Formula 1) below, diffusion occurs from a place of high concentration to a place of low concentration, and the greater the concentration gradient, the greater the amount of diffusion.

(Formula 1)

$$J_B = -D_B \frac{dC_B}{dx}$$

$J_B$: Flux, which represents the number of atoms passing through a unit area per unit time
$D_B$: Diffusion coefficient of B atoms
C: Concentration
x: Direction
$dC_B/dx$: Concentration change rate in the x-direction

For example, according to the above (Formula 1), the method of increasing the amount of Fe diffusion or flux of the base steel sheet in a short period of time when moving to the heating furnace is possible when the Fe concentration gradient formed between the Al plating layer and the base steel sheet in the Al plated steel sheet is greater. The steeper the Fe concentration gradient, the more the amount of Fe diffusion may be increased in a short period of time when moving to a heating furnace, and Fe may diffuse to the surface layer in a short period of time in the initial stage of heating, thereby forming an FeAl$_3$ phase with a high melting point.

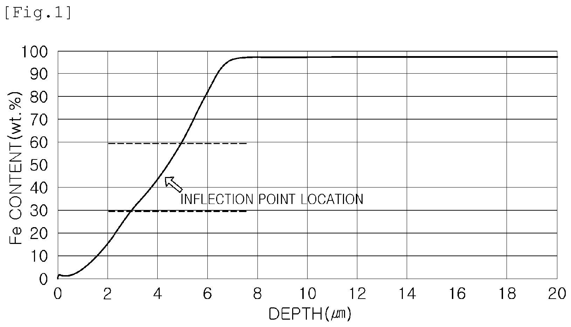

In the GDOES analysis results from the Al plating layer surface in the thickness direction inside the base steel sheet, it is effective that the Fe concentration gradient in the section where the Fe content in the Al plating layer is 40 to 90 wt.% is 13 to 26 wt.%/$\mu$m, preferably 13.5 to 23 wt.%/$\mu$m. Hereinafter, this will be described in detail with reference to FIG. 1. FIG. 1 is a graph showing the Fe concentration depth profile of Glow Discharge Optical Emission Spectroscopy (GDOES) from the surface for the plated steel sheet of Invention Example 2 manufactured in the following example.

As illustrated in FIG. 1, when the Fe concentration gradient is analyzed as a GDOES depth profile from the Al plating layer surface in the thickness direction inside the base steel sheet, the Fe content is gradual and then the gradient increases rapidly and then changes to a gradual pattern again. Through this, an alloy layer formed at the interface with the base steel sheet is confirmed, and the thickness of the alloy layer may be confirmed to be about 2 to 6 $\mu$m. For example, the inflection point where the Fe slope of the alloy layer and the Fe slope in the plating layer change is confirmed on the GDOES profile. The inflection point on the GDOES profile may be considered as an indicator that distinguishes the AlSi plating layer and the AlSiFe alloy layer, and the alloy layer may be distinguished based on the inflection point. Specifically, the Fe content (wt.%) on the GDOES profile and the position of the inflection point where the Fe slope changes in the profile graph mainly exist between 30 wt.% and 60 wt.%. Therefore, to define the Fe concentration gradient in more detail, the Fe concentration gradient value is limited to between 40 wt.% and 90 wt.%, and the concentration gradient value in the 40 to 90 wt.% Fe range is measured.

If the Fe concentration gradient in the section where the Fe content in the Al plating layer is 40 to 90 wt.% is less than 13 wt.%/$\mu$m, which is a characteristic of a typical Al plated steel sheet, it is not an Al plated steel sheet with improved roll pollution resistance that the present disclosure seeks to develop, and if it exceeds 26 wt.%/$\mu$m, the thickness of the alloy layer in the Al plated steel sheet is too thin, so that when the Al plated steel sheet moves to a heating furnace, the Fe of the base iron easily destroys the thin alloy layer, causing rapid diffusion, which may result in the formation of an uneven alloy layer and a decrease in corrosion resistance.

It is effective that the Fe content in the Al plating layer is 8 to 24 wt.%, more preferably 8.5 to 23 wt.%.

As an example of a method for measuring the Fe content in the Al plating layer, a circular plating layer with a radius of 25 mm is raised and measured using Inductively Couples Plasma (ICP). In a detailed method, a circular Al plating layer with a radius of 25 mm is first dissolved in a 20% NaOH solution, and the entire plating layer is secondarily dissolved in a solution containing HCl and an inhibitor in a ratio of 1:3, and then the combined solution of the first and second solutions is analyzed by ICP to measure the contents of Al, Si, and Fe. At this time, the Fe content should be 8 to 24 wt.%, more preferably 8.5 to 23 wt.%, to be effective in the present disclosure.

In the Fe profile of GDOES, the Fe content may be obtained by integrating the Fe profile, but the GDOES profile represents the Fe content at the corresponding position in the thickness direction, and cannot accurately represent the content of the components included in the entire plating layer. In contrast, ICP analysis is a component analysis of a sample in which only the plating layer is dissolved, and since the Fe content included in the entire plating layer including the Al alloy layer may be obtained, the reliability of the data is high.

Meanwhile, if the Fe content of the Al plating layer is less than 8 wt.%, which is the characteristics of a typical Al plated steel sheet, it is not the Al plated steel sheet with improved roll pollution resistance that the present disclosure intends to develop, and if it exceeds 24 wt.%, the sufficiently greater the difference between the Fe content in the plating layer and the Fe content of the base steel sheet, the greater the Fe diffusion may be promoted during hot press forming. However, if the Fe content in the plating layer exceeds 24 wt.%, there is no significant difference between the Fe content of the base steel sheet and the Fe content of the plating layer, which may cause a problem in that the Fe of the base iron is slowed down in diffusion into the Al plated steel sheet when moving to the heating furnace.

The Al plating layer is sufficient as an Al-based plating widely used in a hot press forming plated steel sheet performed by a person skilled in the art in the technical field of the hot press forming plated steel sheet to which the present disclosure belongs, and the content or type of the component is not particularly limited. In addition to pure Al plating, plating performed by including some Si in Al, plating performed by including some Zn in Al, plating performed by including one or more of Si, Mg, Zn and the like in Al, and the like, may all be included.

The thickness of the Al plating layer is effectively 3 μm to 30 μm, more preferably 4 μm to 26 μm.

If the thickness of the Al plating layer is less than 3 μm, the thickness of the plating layer is too thin, and thus a large amount of unplating may occur on the surface of the Al plated steel sheet, which may affect the corrosion resistance of the part after hot press forming. If exceeding 30 μm, even if the Fe of the base iron rapidly diffuses when moving to the heating furnace, the plating layer is thick, so there may be a problem that it is difficult to improve roll pollution resistance because the possibility of the presence of molten Al in the surface layer is high.

Meanwhile, the base steel sheet is not particularly limited in the target use thereof as long as it is a steel sheet that may be used for hot press forming. In addition to the classification according to the manufacturing process, such as hot-rolled steel sheet, cold-rolled steel sheet, and the like, the steel type and alloy composition system, such as dual phase (DP) steel, composite phase steel, TRIP steel, TWIP steel, and the like are not particularly limited.

As a detailed example, the 22MnB5 steel type is representative, and it may be a steel type that contains carbon (C): 0.1 to 0.3%, manganese (Mn): 1.0 to 2.0%, silicon (Si): 0.02 to 0.30%, and boron (B): 5 to 45 ppm in wt.%, and inevitable impurities and iron (Fe) as the remainder thereof.

**Next, an embodiment of a method for manufacturing an aluminum plated steel sheet according to an example of the present disclosure will be described in detail.** The method for manufacturing an aluminum plated steel sheet includes an operation of immersing a base steel sheet in a plating bath to attach a plating solution to the surface of the base steel sheet; an operation of controlling the amount of plating adhesion on the surface of the base steel sheet; and the operation of transferring the base steel sheet to which the plating solution is attached to a cooling means. Each operation is described in detail below.

First, the base steel sheet is immersed in a plating bath to attach the plating solution to the surface of the base steel sheet.

As described above, the base steel sheet is not particularly limited in terms of the object, steel type and the like thereof, as long as it may be used as a hot press formed part. Before immersing the base steel sheet in the plating bath, the base steel sheet may be heated to a certain temperature (inlet temperature). At this time, the inlet temperature is effectively 620 to 680°C. By heating the base steel sheet to the inlet temperature, the molten aluminum is rapidly solidified on the surface of the steel sheet, thereby preventing problems and the like such as a deviation in the amount of plating adhesion or non-plating due to a decrease in fluidity. However, excessive heating may accelerate the melting of the steel sheet, thereby accelerating the generation of dross.

The plating bath may be an Al-based plating bath, and the Al-based plating bath is for forming an Al plating layer, and if it is a plating that may be applied to a plated steel sheet for hot press forming, it may be applied to the present disclosure without limitation. As a preferred example, the plating bath composition may include silicon (Si): 6 to 12 wt%, iron (Fe): 1 to 4 wt%, and aluminum (Al) and inevitable impurities as the remainders thereof.

It is effective that the temperature of the plating bath is 630 to 680°C. If the temperature of the plating bath is too low, the fluidity of the plating solution in the plating bath may be reduced, while if the temperature is too high, the generation of dross in the plating bath may increase.

Next, the plating adhesion amount of the base steel sheet is adjusted. The means or method for adjusting the plating adhesion amount is not particularly limited, and may be performed by a method commonly performed in the technical field to which the present disclosure belongs. As an example, an air knife (A/K) is used.

It is effective that the plating adhesion amount is 8 to 80 g/m² based on one side and the plating layer thickness is 3 to 30 μm. In the plating adhesion amount of Al plating, it may be converted into the plating adhesion amount when the plating layer thickness is multiplied by 2.7, and when the plating layer thickness of 3 to 30 μm is converted into the plating adhesion amount, it is approximately 8 to 80 g/m². A more preferable thickness is 4 to 26 μm, and the plating adhesion amount is 10 to 70 g/m².

The base steel sheet of which the plating adhesion amount is adjusted is transported to a cooling means and cooled. When the base steel sheet with the plating solution attached enters the cooling means, rapid cooling begins, and the reaction of the alloy layer in the Al plating layer may stop. An example of the above cooling means is a cooling tower.

The above manufacturing method is effective when the K value defined by the following Formula 2 is 200 to 400.

The Formula 2 may be calculated as follows.

$$\text{(Formula 2)} \quad K = 10^6 * (a*d)/(b*c*e),$$

where, a: Si content (weight %) in the plating bath, b: line speed (mpm), c: A/K gap (mm), d: A/K pressure (kPa), A/K height (mm), and the line speed refers to the speed of transport by passing through the plating bath, the gap of the air knife (A/K) for controlling the amount of plating adhesion refers to the gap between the steel sheet and the air knife, and the A/K height refers to the distance from the plating bath to the A/K.

The above (Formula 2) is a result of considering the characteristics of respective variables that determine the characteristics of the plating layer to manufacture a plated steel sheet that reduces roll pollution, and has a technical meaning in that it considers the factors affecting the manufacture of the plated steel sheet and their correlations for the purpose of improving roll pollution resistance.

To manufacture a steel sheet for improving roll pollution resistance, considering various process factors such as Si content in plating bath, plating bath temperature, inlet temperature, line speed, A/K gap, A/K pressure, A/K height, cooling tower cooling speed, the like, it is necessary to optimize the plating bath Si content, line speed, A/K gap, A/K pressure, and A/K height, which are derived from the above (Formula 2). When the K value of the above (Formula 2) is 200 to 400, roll pollution resistance may be improved.

In detail, when the K value is less than 200, it is difficult to reduce roll pollution because the A/K pressure is not high enough to improve roll pollution resistance, or the line speed, A/K gap, and A/K height are low, and if the K value exceeds 400, it is difficult to improve roll pollution resistance because the A/K pressure is too high, or the line speed, A/K gap, and A/K height are higher than the appropriate values.

Before immersing the base steel sheet in the plating bath, various methods may be provided. For example, it may be manufactured by including processes such as hot rolling, coiling, cold rolling, annealing and the like after heating the steel slab. The detailed process conditions for heating, hot rolling, coiling, cold rolling, annealing and the like of the steel slab required in this case may vary depending on the characteristics required for the base steel sheet, and therefore are not particularly limited.

**Next, an embodiment of the hot press formed part of the present disclosure will be described in detail.**

The hot press formed part of the present disclosure includes base iron, and an Fe-Al alloy plating layer formed on the base iron, and includes a diffusion layer formed between the Fe-Al alloy plating layer and the base iron.

The Fe-Al alloy plating layer and the diffusion layer refer to alloys formed by mutual diffusion and reaction of the plating layer components and the base iron components during the heating process of the aluminum plated steel sheet. In the diffusion layer and the Fe-Al alloy plating layer, the part where $\alpha$-Fe and $Fe_3Al$ with high Fe content are formed in large quantities is referred to as the diffusion layer, and the other part where FeAl, $Fe_2Al_5$, and $FeAl_3$ with relatively high Al content are formed in large quantities is referred to as the Fe-Al alloy plating layer. The diffusion layer and the Fe-Al alloy plating layer may be optically confirmed through Nital etching on the cross-section of the hot press formed part, and the diffusion layer is the first layer that is present directly on the base iron transformed into martensite, and from the subsequent second layer, it may be regarded as the Fe-Al alloy layer.

The composition of the base iron or base steel sheet is not particularly limited, and anything that may be used as a hot press formed part is sufficient. As a preferred example, the base iron contains, in wt.%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, and REM: 0 to 0.3%, and Fe and impurities as the remainders thereof.

The Fe-Al alloy plating layer refer to an alloyed plating layer formed by alloying the aluminum-based plating layer of the plated steel sheet for hot press forming, having an aluminum-based plating layer, with the base material during the hot press forming process. The aluminum-based plating layer refers to a layer containing aluminum (Al) as a main component and partially containing (within 15 wt%) silicon (Si) to prevent excessive alloying between aluminum and Fe of the steel during plating. In addition, other components may be included as needed.

Meanwhile, the diffusion layer refers to a layer formed by combining Fe of the base steel sheet and a portion of Al, which is a main component of the aluminum-based plating layer.

The hot press formed part has Fe-hump and Al-hump in the Glow Discharge Optical Emission Spectrometry (GDOES) analysis graph of Fe and Al contents observed in the thickness direction from the surface of the Fe-Al alloy plating layer, and may satisfy the following relationship 1.

Fe maximum value (wt.%) of Fe-hump > Al maximum value (wt.%) of Al-hump [Relationship 1]

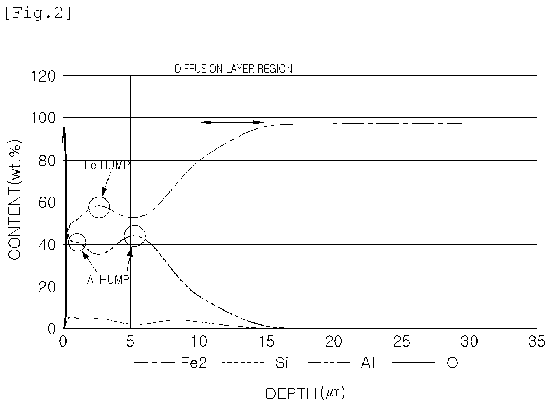

Hereinafter, a detailed description will be given with reference to FIG. 2. FIG. 2 is a graph of GDOES analysis performed from the surface of the hot press formed part of Invention Example 3 among the following examples. Looking at FIG. 2, it can be confirmed that one Fe-hump exists and two to three Al-humps exist. The Fe-hump may be observed between the Al-humps.

The Fe-Al alloy plating layer of the hot press formed part may be divided into 1 to 4 layers, and any one thereamong may be an AlFeSi layer. In the present disclosure, the AlFeSi layer may be changed to create a layer with excellent roll pollution resistance. In particular, as the Fe content increases, an alloy layer with a high melting point is formed, and the AlFeSi layer with a high Fe content may delay roll pollution when the aluminum hot press formed part moves in the heating furnace.

To increase the melting point in the Fe-Al alloy plating layer, it is easy to understand by referring to the Binary Phase Diagram of Fe-Al. In the Fe-Al Binary Phase Diagram, as the Fe content in Al increases, the melting point increases from 660°C to 1538°C, and when the Al and Fe contents are 1:1, the melting point is approximately around 1100°C. However, when the Fe content in Al increases from 0 wt.% to 50 wt.%, the melting point increases rapidly in this section, which means that there is a risk that the melting point may easily be lowered depending on the Fe content change according to the atmosphere in the furnace, which may cause roll pollution.

Therefore, the Fe maximum value of the Fe-hump in the Fe-Al alloy plating layer should be higher than the Al maximum value of the Al-hump, which means that there is a part where the Fe-hump is higher than the Al-hump, and it shows that the diffusion speed of Fe is fast when the plated steel sheet moves to the furnace. Therefore, the hot press formed part of the present disclosure may stably form a Fe-Al alloy plating layer with a high melting point.

Meanwhile, the Fe maximum value (wt.%) of the Fe-hump may be 50 wt.% or more, and the Al maximum value of the Al-hump may be 50 wt.% or less.

If the Fe maximum value of the Fe-hump is less than 50 wt.%, as explained above, a Fe-Al alloy plating layer in a section where the melting point changes rapidly may be formed, which may cause a roll pollution problem. Similarly, if the Al maximum value of the Al-hump exceeds 50 wt.%, roll pollution may also be caused by the formation of a Fe-Al alloy plating layer with a low melting point.

Meanwhile, the hot press formed part may satisfy the following relationship 2 or relationship 3 for the Fe and Al contents measured in the depth direction in the GDOES analysis graph.

Minimum value (wt.%) of Fe content observed between maximum value of Fe-hump and diffusion layer > maximum value (wt.%) of Al-hump                     [Relationship 2]

$1/2 \times$[(Maximum value(wt.%) of Al-Hump) + (Minimum value(wt.%) of Al between Al-Hump)] $\leq$ Minimum Value (wt.%) of Fe Content observed between Maximum Value of Fe-Hump and Diffusion Layer                     [Relationship 3]

The above relationships 2 and 3 may be considered in conjunction with the Fe-Al Binary Phase Diagram described above, and when the minimum value of the Fe content observed between the maximum value of the Fe-hump and the diffusion layer is greater than the maximum value of the Al-hump in the Fe-Al alloy plating layer, roll pollution may be sufficiently delayed, which may lead to good results.

The above relationship 3 is a relaxed condition of relationship 2, and even in the case in which the minimum value of the Fe content observed between the maximum value of the Fe-hump and the diffusion layer is present as the average or more of the maximum value and the minimum value of the Al-hump in the Fe-Al alloy plating layer, roll pollution may also be delayed.

As explained above in the Fe-Al Binary Phase Diagram, when the Fe content increases from 0 wt.% to 50 wt.%, the melting point of the Fe-Al alloy layer increases rapidly. At this time, if the Fe content is at least equal to or greater than the average of the maximum and minimum values of the Al-hump in the Fe-Al alloy plating layer, the melting point of the alloy plating layer may be sufficiently maintained at 1000°C or higher, thereby having a higher melting point than the temperature condition (850 to 950°C) of the heating furnace.

Meanwhile, in the GDOES analysis graph, the Al-hump may be provided as two or more, and the Fe-hump may be observed between the Al-humps based on the thickness direction.

Meanwhile, the thickness of the diffusion layer may be 3 to 10 $\mu$m, and the thicknesses of the diffusion layer and the Fe-Al alloy plating layer may be 10 to 30 $\mu$m.

**Next, an embodiment of a method for manufacturing a hot press formed part of the present disclosure will be described in detail.**

The manufacturing method may be performed by providing a base steel sheet having an aluminum-based plating layer, heating the provided base steel sheet, and then performing hot press forming and cooling.

For example, the base steel sheet having the aluminum-based plating layer may be provided as a blank by performing shear processing. It is preferable to heat the provided blank to the austenite single-phase temperature or more, more specifically, a temperature range of Ac3 to 975°C. If the heating temperature is lower than Ac3 temperature, it is difficult to secure strength and crash resistance due to the presence of untransformed ferrite in the two-phase section. On the other hand, if the heating temperature exceeds 975°C, excessive oxides are generated on the surface of the part, making it difficult to secure spot weldability, and the manufacturing cost for maintaining a high temperature increases. It is preferable that the heated blank be maintained in the above temperature range for 1 to 1000 seconds. When the maintenance time is less than 1 second, it is difficult to obtain a uniform temperature distribution throughout the blank, which may cause material deviation by location, and when it exceeds 1000 seconds, it is difficult to secure spot weldability due to excessive oxide generation on the surface, and it may also cause an increase in the manufacturing cost of the part. The heated blank is transferred to a press to be formed and cooled. At this time, the cooling rate is preferably 20°C/s or higher. If the cooling rate is less than 20°C/s, a ferrite phase is introduced during cooling and formed at the grain boundary, which may deteriorate physical properties such as strength, crash resistance or the like. The process of transferring, forming and cooling the blank is not particularly limited, and may be applied as is to the hot press forming method commonly used.

**Mode for Invention**

Hereinafter, embodiments of the present disclosure will be described. It will be understood that the following embodiments may be modified in various ways without departing from the scope of the present disclosure by those skilled in the art. The following embodiments are intended to help understand the present disclosure, and the scope of the present disclosure should not be limited to the following embodiments, but should be determined by the claims described below as well as their equivalents.

(Embodiment)

In an embodiment of the present disclosure, a typical 22MnB5 base steel sheet was prepared, and was immersed in a plating bath containing about 9 to 10 wt.% of Si and containing Al and unavoidable impurities as the remainders, thereby manufacturing the aluminum plated steel sheet. At this time, the temperature of the plating bath was 640 to 670°C, and the inlet temperature of the base steel sheet was 650 to 680°C.

To manufacture the plated steel sheet, the Si content in the plating bath, the steel sheet transport speed (line speed), and the single-sided plating adhesion amount (10 to 80 g/m$^2$) were controlled. The plating adhesion amount was controlled by an air knife (A/K), and cooling was performed by transportation to a cooling tower as a cooling means. The process conditions at this time are illustrated in Table 1.

[Table 1]

| Classification | Plating Bath Si Content (wt%) | Line Speed (mpm) | Air Knife (A/K) | | | Cooling Tower Cooling Speed (°C/s) | Formula 2 |
|---|---|---|---|---|---|---|---|
| | | | A/K Gap (mm) | A/K Pressure (kPa) | A/K Height (mm) | | |
| Comparative Example 1 | 7.5 | 120 | 15 | 11 | 900 | 15 | 51 |
| Comparative Example 2 | 7.5 | 100 | 14 | 11 | 1000 | 13 | 59 |
| Comparative Example 3 | 7.5 | 75 | 9 | 11 | 900 | 14 | 136 |
| Comparative Example 4 | 7.5 | 75 | 11 | 13 | 800 | 14 | 148 |
| Comparative Example 5 | 9.5 | 90 | 10 | 10 | 1000 | 15 | 106 |
| Comparative Example 6 | 9.5 | 90 | 9 | 11 | 900 | 16 | 143 |
| Comparative Example 7 | 9.5 | 80 | 10 | 11 | 900 | 15 | 145 |
| Comparative Example 8 | 9.5 | 75 | 12.5 | 10 | 1000 | 15 | 101 |
| Comparative Example 9 | 9.5 | 120 | 15 | 12 | 1000 | 14 | 63 |
| Comparative Example 10 | 9.5 | 120 | 15 | 11 | 900 | 15 | 65 |
| Comparative Example 11 | 9.5 | 100 | 14 | 11 | 1000 | 13 | 75 |
| Invention Example 1 | 9.5 | 75 | 7.5 | 11 | 900 | 14 | 206 |
| Invention Example 2 | 9.5 | 75 | 10 | 13 | 800 | 14 | 206 |
| Invention Example 3 | 9.5 | 65 | 8 | 13 | 800 | 15 | 297 |
| Invention Example 4 | 9.5 | 60 | 9 | 13 | 800 | 15 | 286 |
| Invention Example 5 | 9.5 | 60 | 7.5 | 12 | 700 | 14 | 362 |
| Comparative Example 12 | 9.5 | 55 | 7.5 | 12 | 600 | 15 | 461 |

(continued)

| Classificati on | Plating Bath Si Content (wt%) | Line Speed (mpm) | Air Knife (A/K) | | | Coolin g Tower Coolin g Speed (°C/s) | Formul a 2 |
| --- | --- | --- | --- | --- | --- | --- | --- |
| | | | A/K Gap (mm) | A/K Pressure (kPa) | A/K Height (mm) | | |
| Comparative Example 13 | 11.5 | 60 | 5.5 | 13 | 900 | 16 | 503 |
| Comparative Example 14 | 11.5 | 70 | 7.5 | 15 | 800 | 14 | 411 |
| Comparative Example 15 | 11.5 | 65 | 5 | 12 | 1000 | 13 | 425 |
| Comparative Example 16 | 11.5 | 50 | 7.5 | 11 | 800 | 15 | 422 |
| Comparative Example 17 | 11.5 | 60 | 5 | 12 | 1000 | 14 | 460 |

The above formula 2 may be calculated as follows.

$$(Formula\ 2)\ K = 10^6*(a*d)/(b*c*e)$$

Where, a: Si content (wt%) in the plating bath, b: line speed (mpm), c: A/K gap (mm), d: A/K pressure (kPa), A/K height (mm)

For the aluminum plated steel sheet manufactured as described above, the Fe concentration gradient in the Al plating layer and the alloy composition of the Al plating layer were measured and illustrated together in Table 2.

The Fe concentration gradient was obtained in the section where the Fe content was 40 to 90 wt.%, from the results of GDOES analysis in the depth direction from the surface of the Al plating layer of the manufactured aluminum plated steel sheet. For the alloy composition, the Al plating layer was first dissolved in a 20% NaOH solution, and then the plating layer was completely dissolved (secondarily) in a solution containing HCl and an inhibitor in a 1:3 ratio, and then, the solution obtained by combining the first and second solutions was analyzed by ICP to measure the contents of Al, Si, and Fe.

[Table 2]

| Classificat ion | Al Plating Layer Composition (wt%) | | | Fe Concentration Gradient (wt.%/μm) |
| --- | --- | --- | --- | --- |
| | Al | Si | Fe | |
| Comparative Example 1 | 83.70 | 7.10 | 5.2 | 7.53 |
| Comparative Example 2 | 84.60 | 7.60 | 6.8 | 8.01 |
| Comparative Example 3 | 86.30 | 7.90 | 5.8 | 8.32 |
| Comparative Example 4 | 79.50 | 7.60 | 6.0 | 8.76 |
| Comparative Example 5 | 84.40 | 8.80 | 5.1 | 9.65 |
| Comparative Example 6 | 85.00 | 9.10 | 5.9 | 10.23 |
| Comparative Example 7 | 84.40 | 8.70 | 6.9 | 11.11 |
| Comparative Example 8 | 84.10 | 8.80 | 7.1 | 11.43 |
| Comparative Example 9 | 82.90 | 9.30 | 7.8 | 11.78 |
| Comparative Example 10 | 83.70 | 9.10 | 7.2 | 10.91 |
| Comparative Example 11 | 84.60 | 8.60 | 6.8 | 10.43 |
| Invention Example 1 | 82.60 | 8.90 | 8.5 | 13.04 |
| Invention Example 2 | 79.50 | 8.60 | 11.9 | 14.57 |
| Invention Example 3 | 78.40 | 8.80 | 12.8 | 15.83 |
| Invention Example 4 | 76.30 | 9.40 | 14.3 | 16.98 |
| Invention Example 5 | 74.30 | 9.90 | 15.8 | 18.08 |
| Comparative Example 12 | 75.50 | 10.20 | 14.3 | 9.29 |

(continued)

| Classificat ion | Al Plating Layer Composition (wt%) | | | Fe Concentration Gradient (wt.%/$\mu$m) |
|---|---|---|---|---|
| | Al | Si | Fe | |
| Comparative Example 13 | 85.00 | 10.50 | 5.9 | 10.23 |
| Comparative Example 14 | 84.40 | 11.10 | 6.9 | 11.11 |
| Comparative Example 15 | 78.40 | 10.80 | 12.8 | 9.93 |
| Comparative Example 16 | 76.30 | 11.70 | 14.3 | 9.98 |
| Comparative Example 17 | 79.50 | 11.30 | 6.0 | 8.76 |

FIG. 1 is a graph showing the GDOES Fe concentration profile of Invention Example 2 in Table 2 above.

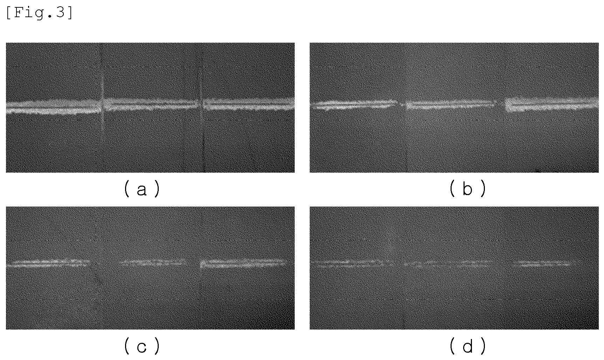

For the aluminum plated steel sheets manufactured as in Tables 1 and 2 above, roll pollution characteristics were evaluated, and the results are illustrated in FIGS. 3 to 4 and Table 3 below.

After heat-treating the aluminum plated steel sheets manufactured as in Tables 1 and 2 above at 900°C for 5 minutes, GDOES was checked to confirm Fe-hump and Al-hump in the Fe-Al alloy plating layer. The cause of roll pollution is that alloying occurs slowly due to slow diffusion of Fe during movement in the heating furnace, and therefore, Fe-hump and Al-hump were measured to observe rapid alloying through GDOES, and the results are illustrated in Table 3.

[Table 3]

| Classificati on | Average Powder Generatio n Amount (mg) | Maximum Value (wt. %) of Fe-Hump | Minimum Value (wt. %) of Fe between Maximum Value of Fe-Hump and Diffusion Layer | Maximum Value (wt.%) of Fe-Hump | Minimum Value (wt. %) of Al between Al-Hump | 1/2x[(Max imum value (wt. %) of Al-Hump)+(Mi nimum value (wt. %) of Al between Al-Hump)] |
|---|---|---|---|---|---|---|
| Comparative Example 1 | 9.73 | 51.02 | 48.45 | 54.85 | 45.21 | 50.03 |
| Comparative Example 2 | 9.12 | 51.31 | 47.21 | 53.02 | 44.03 | 48.53 |
| Comparative Example 3 | 7.25 | 50.98 | 47.05 | 53.29 | 43.26 | 48.28 |
| Comparative Example 4 | 6.13 | 49.84 | 46.22 | 51.99 | 43.81 | 47.90 |
| Comparative Example 5 | 6.53 | 49.32 | 46.03 | 52.85 | 43.11 | 47.98 |
| Comparative Example 6 | 6.78 | 49.18 | 46.88 | 52.17 | 42.84 | 47.51 |
| Comparative Example 7 | 7.32 | 48.99 | 46.91 | 51.89 | 42.31 | 47.10 |
| Comparative Example 8 | 6.25 | 50.14 | 46.31 | 52.23 | 42.29 | 47.26 |
| Comparative Example 9 | 7.85 | 49.31 | 46.02 | 51.89 | 41.86 | 46.88 |
| Comparative Example 10 | 8.27 | 49.23 | 45.21 | 51.16 | 41.52 | 46.34 |
| Comparative Example 11 | 5.32 | 48.21 | 44.15 | 50.11 | 41.01 | 45.56 |
| Invention Example 1 | 2.63 | 53.27 | 48.03 | 47.19 | 39.15 | 43.17 |
| Invention Example 2 | 2.32 | 54.99 | 48.87 | 45.69 | 39.21 | 42.45 |

(continued)

| Classification | Average Powder Generation Amount (mg) | Maximum Value (wt. %) of Fe-Hump | Minimum Value (wt. %) of Fe between Maximum Value of Fe-Hump and Diffusion Layer | Maximum Value (wt.%) of Fe-Hump | Minimum Value (wt. %) of Al between Al-Hump | 1/2x[(Max imum value (wt. %) of Al-Hump)+(Mi nimum value (wt. %) of Al between Al-Hump)] |
|---|---|---|---|---|---|---|
| Invention Example 3 | 1. 83 | 55.86 | 50.76 | 45.25 | 38.01 | 41.63 |
| Invention Example 4 | 1.52 | 56.72 | 51.22 | 42.65 | 37.58 | 40.12 |
| Invention Example 5 | 0.92 | 57.38 | 52.68 | 41.29 | 36.47 | 38.88 |
| Comparative Example 12 | 6.29 | 50.55 | 47.16 | 53.05 | 44.81 | 48.93 |
| Comparative Example 13 | 5.98 | 48.22 | 46.86 | 51.92 | 42.15 | 47.04 |
| Comparative Example 14 | 8.92 | 49.51 | 46.14 | 52.86 | 42.75 | 47.81 |
| Comparative Example 15 | 7.29 | 49.36 | 46.21 | 52.33 | 42.17 | 47.25 |
| Comparative Example 16 | 6.41 | 50.59 | 44.21 | 53.21 | 43.65 | 48.43 |
| Comparative Example 17 | 7.81 | 51.09 | 45.35 | 53.66 | 42.31 | 47.99 |

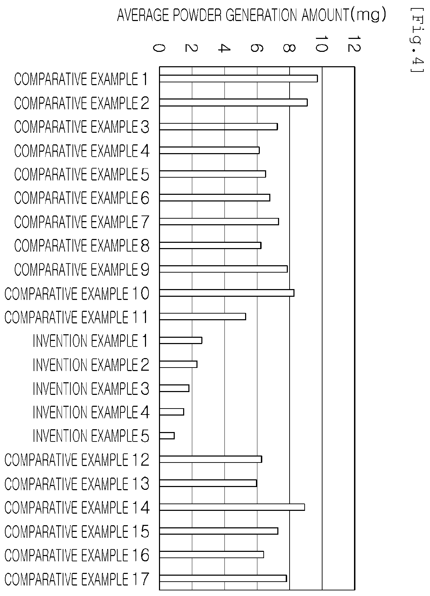

To evaluate the roll pollution characteristics, each specimen was heat treated at 900°C for 5 minutes, and then powdering was evaluated. The powdering evaluation was performed by shearing the above heat-treated specimen to $60 \times 30$ mm and then performing a V-bending test. At this time, the experimental conditions were 20°, 2R, and the average powder generation amount is illustrated in Table 3. In addition, FIG. 3 illustrates photographs of the V-banding test results for some specimens in Table 3 below, and FIG. 4 illustrates a graph of the amounts of powder generated in respective specimens in Table 3.

The cause of roll pollution is that during moving to the heating furnace, when the Al content with a low melting point increases in the surface layer due to slow alloying of base iron Fe, the molten aluminum alloy layer sticks to the roll, but it is difficult to evaluate this on an actual line.

Therefore, to compare the formation of a large number of $\alpha$-Fe and $Fe_3Al$ phases with a high melting point, for example, a high Fe content, in the state of completed heat treatment, the roll pollution prediction evaluation may be performed at room temperature by considering their characteristics.

For example, the faster the Fe diffusion speed when moving in the heating furnace, the more the content of the Al alloy plating layer in the plating steel to be invented is in the order of Al < $FeAl_3$ < $Fe_2Al_5$ < FeAl < $Fe_3Al$ < $\alpha$-Fe, and when it exists in the direction in which $\alpha$-Fe increases, it means that the alloying speed is high and also means that a phase with a high melting point has been formed.

The characteristics of the above phases are that $\alpha$-Fe and $Fe_3Al$ with relatively high Fe contents show ductile characteristics at room temperature, while FeAl, $Fe_2Al_5$, and $FeAl_3$ with relatively high Al contents show brittle characteristics. Therefore, considering the ductile and brittle characteristics of these phases at room temperature, if the amount of powdering is compared for the part after heat treatment, the Fe diffusion speed may be relatively compared, and the roll pollution characteristics may be confirmed by evaluating the powdering property.

As can be appreciated from the results in Table 3 and FIGS. 3 to 4 above, it can be seen that the aluminum plated steel sheet corresponding to the invention example satisfying the range presented in the present disclosure has significantly reduced plating powder generation during the hot press forming process.

Therefore, in the invention example according to the present disclosure, not only does a large amount of Fe exist in the plating layer in the plated steel sheet, but also a large amount of Fe may diffuse because the Fe gradient in the alloy layer is large, and thus the ratio of the diffusion layer after heat treatment is high, and the hard layer ratio therefore is lowered, and the amount of powdering generation is reduced.

**Claims**

1.  A hot press formed part comprising:

    a base iron, an Fe-Al alloy plating layer formed on the base iron, and a diffusion layer formed between the base iron and the Fe-Al alloy plating layer,
    wherein in a GDOES analysis graph of Fe and Al contents observed in a thickness direction from a surface of the Fe-Al alloy plating layer, Fe-hump and Al-hump exist, and
    the following relationship 1 is satisfied,

    Fe maximum value (wt.%) of Fe-hump > Al maximum value (wt.%) of Al-hump.                   [Relationship 1]

2.  The hot press formed part of claim 1, wherein the Fe maximum value (wt.%) of the Fe-hump is 50 wt.% or more.

3.  The hot press formed part of claim 1, wherein the Al maximum value (wt.%) of the Al-hump is 50 wt.% or less.

4.  The hot press formed part of claim 1, wherein the hot press formed part satisfies the following relationship 2,

    Minimum value (wt.%) of Fe content observed between maximum value of Fe-hump and diffusion layer > Maximum value (wt.%) of Al-hump.                   [Relationship 2]

5.  The hot press formed part of claim 1, wherein the number of Al-humps is two or more.

6.  The hot press formed part of claim 5, wherein the hot press formed part satisfies the following relationship 3,

    1/2x[(Maximum value(wt.%) of Al-Hump)+(Minimum value(wt.%) of Al between Al-Hump)] ≤ Minimum Value (wt.%) of Fe Content observed between Maximum Value of Fe-Hump and Diffusion Layer                   [Relationship 3]

7.  The hot press formed part of claim 5, wherein the Fe-hump exists between the Al-humps in the thickness direction.

8.  The hot press formed part of claim 1, wherein the base iron is composed of, in wt.%, C: 0.02 to 0.6%, Si: 0.001 to 2%, Al: 0.001 to 1%, Mn: 0.1 to 4%, P: 0.05% or less, S: 0.02% or less, N: 0.02% or less, Ti: 0 to 0.1%, B: 0.0001 to 0.01%, Cu: 0 to 1.00%, Mo: 0 to 1.00%, Cr: 0 to 1.00%, Ni: 0 to 1.00%, V: 0 to 1.00%, Ca: 0 to 0.01%, Nb: 0 to 0.1%, Sn: 0 to 1%, W: 0 to 1%, Sb: 0 to 1%, Mg: 0 to 0.1%, Co: 0 to 1%, As: 0 to 1%, Zr: 0 to 1%, Bi: 0 to 1%, and REM: 0 to 0.3%, and Fe and impurities as remainders.

[Fig.1]

INFLECTION POINT LOCATION

[Fig.2]

[Fig.3]

(a)

(b)

(c)

(d)

[Fig.4]

## INTERNATIONAL SEARCH REPORT

| International application No. |
|---|
| **PCT/KR2023/020836** |

### A. CLASSIFICATION OF SUBJECT MATTER

**C23C 2/12**(2006.01)i; **C23C 2/28**(2006.01)i; **C23C 2/40**(2006.01)i; **C22C 38/58**(2006.01)i; **C22C 38/50**(2006.01)i; **C22C 38/42**(2006.01)i; **C22C 38/54**(2006.01)i; **C22C 38/46**(2006.01)i; **C22C 38/44**(2006.01)i; **C21D 8/02**(2006.01)i

According to International Patent Classification (IPC) or to both national classification and IPC

### B. FIELDS SEARCHED

Minimum documentation searched (classification system followed by classification symbols)

C23C 2/12(2006.01); B21D 22/00(2006.01); B21D 22/02(2006.01); B21D 35/00(2006.01); B23K 20/00(2006.01); C21D 1/18(2006.01); C22C 38/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도금 강판(plated steel sheet), 알루미늄(aluminum), 철(iron), 열간 성형 부재(hot press formed part), 보론(boron)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0078001 A (POSCO) 04 July 2019 (2019-07-04)<br>See paragraphs [0049] and [0184], claims 1, 3-6 and 12 and figure 7. | 1-8 |
| X | KR 10-2018-0131943 A (POSCO) 11 December 2018 (2018-12-11)<br>See paragraphs [0116] and [0165], claims 1 and 3-5 and figure 3. | 1-8 |
| A | JP 2010-018856 A (NIPPON STEEL CORP.) 28 January 2010 (2010-01-28)<br>See paragraphs [0027]-[0028] and figure 1. | 1-8 |
| A | WO 2018-179395 A1 (NIPPON STEEL & SUMITOMO METAL CORPORATION) 04 October 2018 (2018-10-04)<br>See paragraph [0041] and figure 1. | 1-8 |
| A | KR 10-2022-0002161 A (HYUNDAI STEEL COMPANY) 06 January 2022 (2022-01-06)<br>See paragraphs [0049]-[0053] and figure 1. | 1-8 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 March 2024** | **19 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/020836**

| Patent document cited in search report | | | Publication date (day/month/year) | Patent family member(s) | | | Publication date (day/month/year) |
|---|---|---|---|---|---|---|---|
| KR | 10-2019-0078001 | A | 04 July 2019 | KR | 10-2010082 | B1 | 12 August 2019 |
| KR | 10-2018-0131943 | A | 11 December 2018 | BR | 112019025146 | A2 | 16 June 2020 |
| | | | | BR | 112019025146 | B1 | 28 March 2023 |
| | | | | CN | 110691659 | A | 14 January 2020 |
| | | | | CN | 110691659 | B | 08 June 2021 |
| | | | | CN | 110709183 | A | 17 January 2020 |
| | | | | CN | 110709183 | B | 12 August 2022 |
| | | | | CN | 110709184 | A | 17 January 2020 |
| | | | | CN | 110709184 | B | 04 October 2022 |
| | | | | CN | 113308660 | A | 27 August 2021 |
| | | | | CN | 113308660 | B | 08 August 2023 |
| | | | | CN | 115287483 | A | 04 November 2022 |
| | | | | CN | 115555475 | A | 03 January 2023 |
| | | | | EP | 3632585 | A1 | 08 April 2020 |
| | | | | EP | 3632586 | A1 | 08 April 2020 |
| | | | | EP | 3632586 | B1 | 18 October 2023 |
| | | | | EP | 3632587 | A1 | 08 April 2020 |
| | | | | EP | 3632587 | B1 | 23 March 2022 |
| | | | | EP | 4012064 | A1 | 15 June 2022 |
| | | | | ES | 2914361 | T3 | 09 June 2022 |
| | | | | JP | 2020-521880 | A | 27 July 2020 |
| | | | | JP | 2020-521882 | A | 27 July 2020 |
| | | | | JP | 2020-521883 | A | 27 July 2020 |
| | | | | JP | 2022-031677 | A | 22 February 2022 |
| | | | | JP | 2022-106758 | A | 20 July 2022 |
| | | | | JP | 2022-106759 | A | 20 July 2022 |
| | | | | JP | 7026700 | B2 | 28 February 2022 |
| | | | | JP | 7058674 | B2 | 22 April 2022 |
| | | | | JP | 7058675 | B2 | 22 April 2022 |
| | | | | JP | 7189306 | B2 | 13 December 2022 |
| | | | | KR | 10-1988724 | B1 | 12 June 2019 |
| | | | | KR | 10-2010048 | B1 | 21 October 2019 |
| | | | | KR | 10-2018-0131944 | A | 11 December 2018 |
| | | | | KR | 10-2018-0131945 | A | 11 December 2018 |
| | | | | KR | 10-2045622 | B1 | 15 November 2019 |
| | | | | MX | 2019014326 | A | 12 February 2020 |
| | | | | PL | 3632587 | T3 | 08 August 2022 |
| | | | | US | 11141953 | B2 | 12 October 2021 |
| | | | | US | 11198272 | B2 | 14 December 2021 |
| | | | | US | 11338549 | B2 | 24 May 2022 |
| | | | | US | 11801664 | B2 | 31 October 2023 |
| | | | | US | 11820103 | B2 | 21 November 2023 |
| | | | | US | 2020-0101695 | A1 | 02 April 2020 |
| | | | | US | 2020-0109464 | A1 | 09 April 2020 |
| | | | | US | 2020-0190620 | A1 | 18 June 2020 |
| | | | | US | 2021-0362472 | A1 | 25 November 2021 |
| | | | | US | 2022-0055342 | A1 | 24 February 2022 |
| | | | | US | 2022-0250353 | A1 | 11 August 2022 |
| | | | | US | 2024-0009963 | A1 | 11 January 2024 |
| | | | | WO | 2018-221989 | A1 | 06 December 2018 |

Form PCT/ISA/210 (patent family annex) (July 2022)

**INTERNATIONAL SEARCH REPORT**
Information on patent family members

International application No.

**PCT/KR2023/020836**

| Patent document cited in search report | | | Publication date (day/month/year) | Patent family member(s) | | | Publication date (day/month/year) |
|---|---|---|---|---|---|---|---|
| | | | | WO | 2018-221991 | A1 | 06 December 2018 |
| | | | | WO | 2018-221992 | A1 | 06 December 2018 |
| JP | 2010-018856 | A | 28 January 2010 | JP | 5098864 | B2 | 12 December 2012 |
| WO | 2018-179395 | A1 | 04 October 2018 | BR | 112019019587 | A2 | 14 April 2020 |
| | | | | CA | 3057006 | A1 | 04 October 2018 |
| | | | | CN | 110475898 | A | 19 November 2019 |
| | | | | EP | 3604602 | A1 | 05 February 2020 |
| | | | | EP | 3604602 | A4 | 05 August 2020 |
| | | | | JP | 6819771 | B2 | 27 January 2021 |
| | | | | JP | WO2018-179395 | A1 | 12 December 2019 |
| | | | | KR | 10-2019-0133754 | A | 03 December 2019 |
| | | | | MX | 2019011731 | A | 21 November 2019 |
| | | | | RU | 2019134830 | A | 30 April 2021 |
| | | | | RU | 2019134830 | A3 | 30 April 2021 |
| | | | | US | 2020-0032360 | A1 | 30 January 2020 |
| KR | 10-2022-0002161 | A | 06 January 2022 | BR | 112022026329 | A2 | 17 January 2023 |
| | | | | CA | 3184606 | A1 | 06 January 2022 |
| | | | | CN | 114127324 | A | 01 March 2022 |
| | | | | EP | 3933061 | A1 | 05 January 2022 |
| | | | | JP | 2023-532501 | A | 28 July 2023 |
| | | | | KR | 10-2330812 | B1 | 24 November 2021 |
| | | | | MX | 2023000149 | A | 16 February 2023 |
| | | | | US | 11225050 | B1 | 18 January 2022 |
| | | | | US | 2021-0402740 | A1 | 30 December 2021 |
| | | | | WO | 2022-004969 | A1 | 06 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6296805 B